Europäisches Patentamt

European Patent Office

Office européen des brevets

(19)

(11) Publication number: **0 139 337**

A2

(12) # EUROPEAN PATENT APPLICATION

(21) Application number: **84201503.4**

(22) Date of filing: **17.10.84**

(51) Int. Cl.⁴: **F 16 J 15/50**

(30) Priority: **19.10.83 US 543266**

(43) Date of publication of application:
**02.05.85 Bulletin 85/18**

(84) Designated Contracting States:
**AT BE CH DE FR GB IT LI LU NL SE**

(71) Applicant: **Pidou B.V.**
**Heidelaan 10**
**NL-3755 MT Eemnes(NL)**

(72) Inventor: **Meyer-Swantée, Klaus Bertil**
**Heidelaan 10**
**NL-3755 MT Eemnes(NL)**

(74) Representative: **de Boer, Hindrik Geert Jan et al,**
**de Boer & Wigman P.O. Box 5265 De Lairessestraat**
**131-135**
**NL-1007 AG Amsterdam(NL)**

(54) **Multi-part sealing system.**

(57) A multi-part sealing system for hermetically occluding an opening, through which at least one pipe or cable (2) is conducted. The system is manufactured of a resilient material, such as rubber, and comprises a number of segmental parts (7, 8), which jointly constitute a cylindrical body (6). This body is provided on its outside with circumferential, virtually inflexible ribs (9), disposed in radial planes, their outside diameter being greater than the inside diameter of the opening (3, 4) to be occluded. Each hole (11) in the cylindrical body (6) for the conduction of pipe or cable (2) is provided with circumferential, virtually inflexible ribs (12) disposed in radial planes, their inside diameter being at most as great as the outside diameter of the pipe or cable (2) conducted. At least part of the external ribs (9) of the body (6) and internal ribs (12) of the holes are disposed in sets, such ribs being disposed in common radial planes.

FIG.1

60.77.729

Pidou B.V. of Eemnes

- ) -

0139337

# MULTI-PART SEALING SYSTEM

The present invention relates to a multi-part sealing system for hermetically occluding an opening, through which at least one pipe or cable is conducted.

Such a sealing system is manufactured of a resilient material, such as rubber, and comprises a number of segmental parts, which jointly constitute a cylindrical body. These segmental parts, when forming the cylindrical body, abut along axial faces, each of which is provided with at least one axial and substantially semi-cylindrical hole. These semi-cylindrical holes, in the formed state of the aforementioned cylindrical body, constitute internal, at least substantially cylindrical, continuous holes capable of receiving the aforementioned pipe or cable. The cylindrical body, in its formed state, is provided on its outside with circumferential, virtually inflexible ribs, which are disposed in (imaginary) radial planes; the outside diameter of these ribs is greater than the inside diameter of the opening to be occluded. Each hole formed in the cylindrical body is provided with circumferential, virtually inflexible ribs, which are disposed in (imaginary) radial planes; the inside diameter of these ribs is at most, at least substantially, as great as the outside diameter of the pipe or cable conducted by the sealing system. With regard to a given hole formed in the cylindrical body, the aforementioned external ribs and internal ribs are each disposed in pairs or sets, each of which is disposed at least in part in a common (imaginary) radial plane of a predetermined axial length.

A sealing system of the kind described hereinabove is known from US-Patent-No.-4,293,138, which has the same ownership and inventorship as the present application. Said device, however, relates to a cylindrical body, in which only one central hole is provided, which is arranged concentrically with the outer circumference of the cylindrical body and where use is made of only two segmental parts.

It is an object of the present invention to provide a sealing system, which, while still maintaining a cylindrical shape when the segmental parts are placed together, can accommodate any number of pipes or cables.

The sealing system of the present invention is characterized primarily in that at least two of the internal, at least substantially cylindrical holes are arranged eccentrically with respect to the outer circumference of the cylindrical body.

Pursuant to specific embodiments of the present invention, two segmental parts can be provided, with or without a central hole. Four segmental parts can also be provided, with the cylindrical body having at least four eccentrically arranged holes, again with or without a central hole. Similarly, eight segmental parts forming a cylindrical body having at least eight eccentrically disposed holes can also be provided.

The present invention is based on the surprising finding that a qualitatively equally good hermetic occlusion of a passage is obtained by, firstly, arranging a hole eccentrically with respect to the outer circumference of the cylindrical body, and, secondly, selecting more segmental parts than two for forming the cylindrical body only.

0139337

The advantage of the present invention over the aforementioned state of the art is that, in hermetically occluding an opening through which more than one pipe or cable is conducted, use can be made of a cylindrical body, which comprises holes that are arranged eccentrically with respect to the outer circumference of the cylindrical body, so that more than one pipe or cable can be passed sealingly through one cylindrical body. In contrast, when a number of pipes or cables are to be conducted with the device of the aforementioned state of the art, an identical number of cylindrical bodies will be required; not only does this necessitate more extensive fitting operations, but the consumption of materials is thereby increased as well.

This object, and other objects and advantages of the present invention, will appear more clearly from the following specification in conjunction with the accompanying drawings, in which:

fig. 1    is a rear view, taken in the direction of arrow I in fig. 2, of one embodiment of a sealing system according to the invention, provided with three holes for carrying three cables through an opening in a wall;

fig. 2    is a section along line II-II in fig. 1;

fig. 2a    shows one segment of the inventive sealing system of figs. 1 and 2  prior to its insertion into the wall opening;

fig. 3    is a rear view, taken in the direction of arrow III in fig. 4, and also represents a sealing system for the passage of three cables through a wall, but shows the embodiment according to the aforementioned state of the art, drawn on the same scale as figs. 1 and 2;

fig. 4    is a section along line IV-IV in fig. 3;

fig. 5    is a rear view, taken in the direction of arrow V
         in fig. 6, of another embodiment of a sealing system
         according to the invention, comprising four segmental
         parts for carrying five cables;

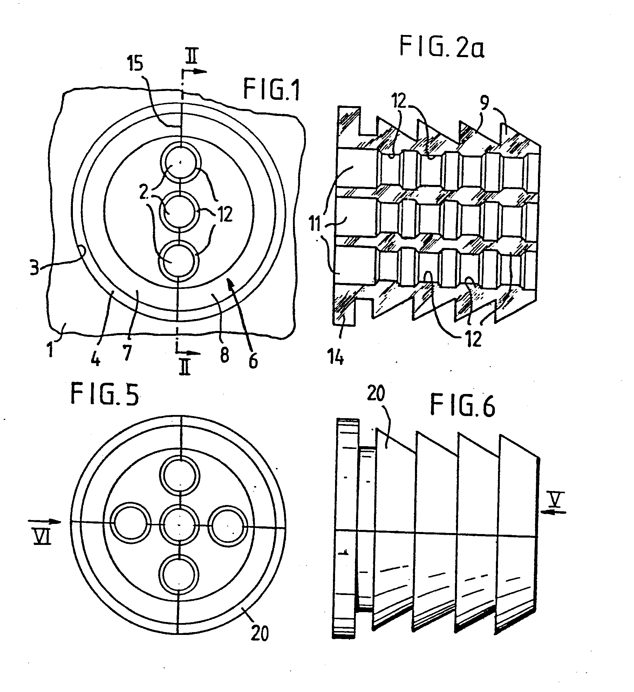

fig. 6    is a lateral view, taken in the direction of arrow VI
         in fig. 5;

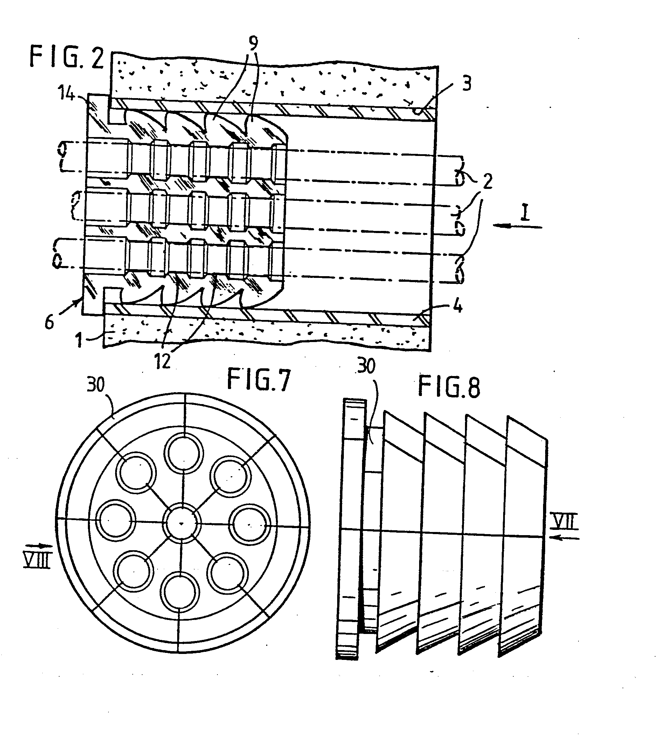

fig. 7    is a rear view, taken in the direction of arrow VII
         in fig. 8, of a further embodiment of a sealing system
         according to the invention, comprising eight segmental
         parts for carrying nine cables;

fig. 8    is a view, taken in the direction of arrow VIII in
         fig. 7;

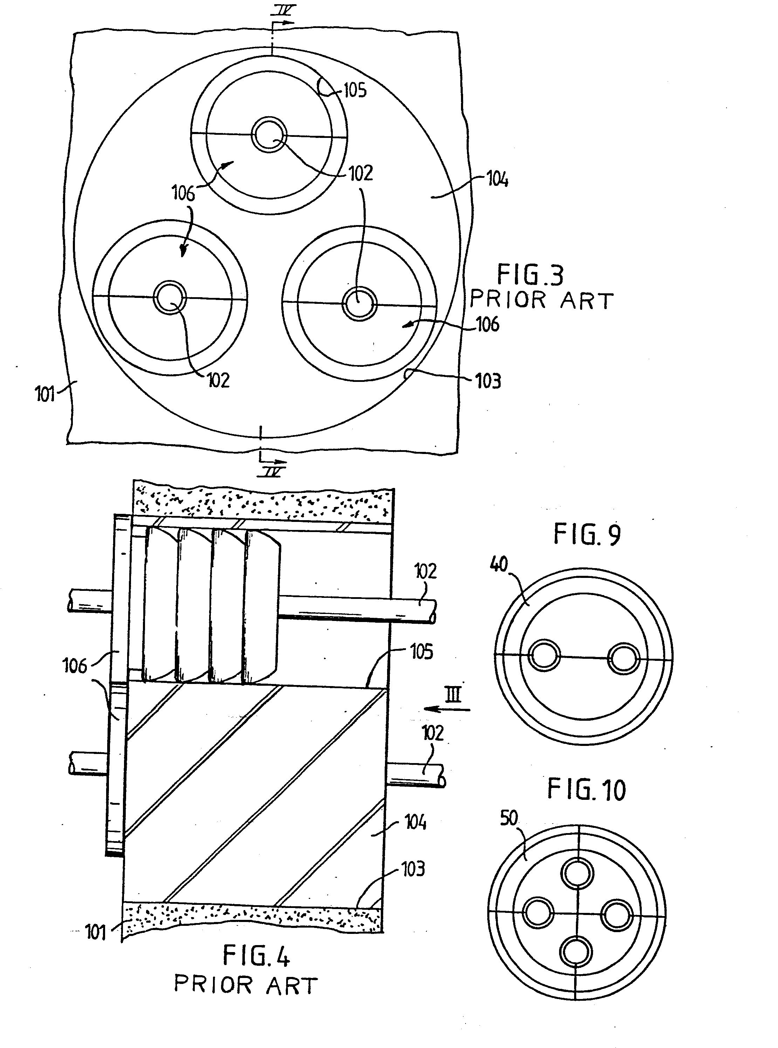

fig. 9    is a rear view of an embodiment of a sealing system
         according to the invention, comprising two holes; and

fig. 10   is a rear view of an embodiment of a sealing system
         according to the invention, comprising four holes, no
         central hole being provided.

Referring to the drawings in detail, figs. 1 and 2 show
a wall 1, which may, for example, be a concrete wall of a
basement of a building under construction, through which three
electric cables 2 are conducted. The wall 1 has an opening 3,
which has either been left during the pouring of concrete or
drilled later in the completed wall. A smooth liner 4, which may
comprise a piece of plastic pipe, is fitted in the opening 3. The
three cables 2 have already been passed through the wall by the
electrician. The sealing system according to the invention
comprises a cylindrical body 6, which is composed of two semi-cylindrical segmental parts 7 and 8. Both segmental parts 7 and 8 are provided with external ribs 9, which lie in (imaginary) radial planes and which, while virtually inflexible, are substantially compressible. Arranged on the flat surface of each segmental part 7 and 8 are three semi-cylindrical holes 11, which are provided with internal ribs 12 disposed in (imaginary) radial planes; these ribs, while virtually inflexible, are substantially compressible. With regard to a given hole 11, the external ribs 9 and the internal ribs 12 are disposed in pairs or sets, each of which is disposed at least partially in a common (imaginary) radial plane having a predetermined axial length.

The procedure of the invention, as specified hereinabove, is implemented as follows. The liner 4 has previously been fixed in the opening 3, for example by the builder's workers, whereupon the electrician has passed the cables through the opening. The segmental parts 7 and 8 are now fitted about the three cables 2, in conformity with the situation indicated in fig. 2a. The segmental halves, now jointly constituting a cylindrical body, are subsequently pushed into the liner 4, and, if necessary, pressed in with the use of a mallet. This pressing operation is continued until the flange 14 is in contact with the head of the liner 4. As fig. 2 indicates, the ribs 9 are now compressed. As a result, internal compressive forces set up in the material of the cylindrical body; these forces are transmitted to the ribs 12 and to the axial contact surfaces 15 for sealing the segmental halves 7 and 8. This causes the ribs 12 to be sealingly tightened about the cables 2 and the contact surfaces 15 to sealingly contact one another. It should be noted that, as a result of the contact of the flanges 14 of the segments 7 and 8 with the head of the liner 4, the segments 7 and 8, and hence their external and internal ribs 9 and 12 respectively, will be properly aligned with one another.

Figs. 3 and 4 likewise show a sealing system for the passage of three cables similar to the cables 2 in figs. 1 and 2. However, figs. 3 and 4 are a representation of a sealing system according to the aforementioned state of the art, on the same scale as figs. 1 and 2. In these figs. 3 and 4, use is made, according to the aforementioned state of the art, of three cylindrical bodies 106, so that a separate cylindrical body is used for each of the cables 102. For this purpose, a cylindrical block 104 with three bores 105 is inserted in the opening 103 in the wall 101. The sealing mechanic now introduces the three cylindrical bodies 106 into each of the bores 105, through which the electrician has already passed a cable 102, for which operation reference is made to the procedure described hereinabove. With the use of the method of sealing according to the aforementioned state of the art, evidently a considerably larger amount of material and cost of fitting will be required than is the case, when adopting the sealing method according to the invention, as explained with reference to figs. 1 and 2. Furthermore, the heretofore known sealing system requires more space for two or more cables, so that a much larger opening is required in the wall.

Figs. 5 and 6 represent a four-part segmented cylindrical sealing body 20 according to the invention, serving a fivefold passage.

Figs. 7 and 8 represent an eight-part segmented cylindrical body 30, which serves for a ninefold passage.

Figs. 9 and 10 respectively represent rear views of a two-part segmented cylindrical body 40 with two holes, and a four-part segmented cylindrical body 50 with four holes, no central hole being provided.

60.77.729
Pidou B.V. of Eemnes

CLAIMS

1. A multi-part sealing system for hermetically occluding an opening, through which at least one pipe or cable is conducted, said sealing system being made of resilient material, characterised in that it comprises at least two segmental parts, which are adapted to be placed together to form a cylindrical body, with adjacent ones of said segmental parts, when placed together to form said cylindrical body, abutting along axial faces thereof, each of which axial faces is provided with at least one substantially semi-cylindrical hole, which extends along the entire axial length thereof; said semi-cylindrical holes being disposed in such a way that, when said segmental parts are placed together to form said cylindrical body, said semi-cylindrical holes form internal, at least substantially cylindrical continuous holes, which are respectively adapted to surround one of said pipes or cables; at least two internal holes of said cylindrical body are provided, with at least two of said internal holes being disposed eccentrically with respect to the outer circumference of said cylindrical body; said segmental parts include a partially cylindrical outer surface, on which are provided radially outwardly projecting, substantially inflexible first ribs, which, when said segmental parts are placed together to form said cylindrical body, are disposed in radial planes; said first ribs are disposed on said segmental parts in such a way, that, when the latter are placed together to form said cylindrical body, respective first circumferentially extending ribs are formed on the outside of said cylindrical body; the outside diameter of said first circumferential ribs is greater than the inside diameter of said opening, which is to be occluded; each segmental part is further provided with substantially inflexible second ribs, which project radially into said semi-cylindrical holes thereof, each of said second ribs being disposed in such a way, that, when said segmental parts are placed together to form said cylindrical body, respective second circumferentially extending ribs are formed in said internal holes, with respective ones of said first and second circumferentially extending ribs, with respect to a given one of said internal holes of said cylindrical body, being disposed in sets and at least partially in common radial planes having a predetermined axial length; the inside diameter of said second circumferential ribs being at most substantially the same as the outside diameter of one of said pipes or cables, which is to be surrounded by said internal hole.

2.   A sealing system according to claim 1, characterised in that each axial face of each of said segmental parts includes a further hole in the form of a fraction of a cylinder, the denominator of said fraction being equal to the number of segmental parts; said further holes being disposed in such a way, that, when said segmental parts are placed together to form a cylindrical body, said further holes form a central, internal, at least substantially cylindrical continuous hole, which is adapted to surround one of said pipes or cables and is concentric with respect to the outer circumference of said cylindrical body.

3.   A sealing system according to claim 1, characterised in that none of said internal holes are central holes, i.e., none of said internal holes is concentric with respect to the outer circumference of said cylindrical body.

4.   A sealing system according to claim 2, characterised in that it includes four segmental parts, with said cylindrical body being provided with at least four eccentrically disposed internal holes.

5.   A sealing system according to claim 3, characterised in that it includes four segmental parts, with said cylindrical body being provided with at least four eccentrically disposed internal holes.

6.    A sealing system according to claim 2, charactarised in that it includes eight segmental parts, with said cylindrical body being provided with at least eight eccentrical disposed internal holes.

7.    A sealing system according to claim 3, charactarised in that it includes eight segmental parts, with said cylindrical body being provided with at least eight eccentrically disposed internal holes.

FIG.1

FIG.2a

FIG.5

FIG.6

FIG.2

FIG.7

FIG.8

0139337

FIG.3
PRIOR ART

FIG.4
PRIOR ART

FIG. 9

FIG. 10